# EUROPÄISCHE PATENTSCHRIFT

(11) **EP 3 109 530 B1**
(45) Veröffentlichungstag und Bekanntmachung des Hinweises auf die Patenterteilung: **14.03.2018**
(21) Anmeldenummer: 16001218.3
(22) Anmeldetag: 30.05.2016
(51) Int. Cl.: F16L 3/127, B60K 13/00, F01N 1/00, F16L 3/137, F16L 55/035

(54) **HALTEVORRICHTUNG ZUM HALTEN EINES KRAFTFAHRZEUG-ABGASROHRS**
HOLDING DEVICE FOR HOLDING A MOTOR VEHICLE EXHAUST PIPE
DISPOSITIF DE RETENUE D'UN TUYAU DE GAZ D'ECHAPPEMENT DE VEHICULE AUTOMOBILE

(30) Priorität: 27.06.2015 DE 102015008350
(43) Veröffentlichungstag der Anmeldung: 28.12.2016
(73) Patentinhaber: MAN Truck & Bus AG, 80995 München (DE)
(72) Erfinder: Fischer, Helmut, 90763 Fürth (DE); Kawczak, Daniela, 200040 Shanghai (CN); Pichler, Markus, 90475 Nürnberg (DE); Hofmann, Sebastian, 90459 Nürnberg (DE); Boehme, Ulrich, 90455 Nürnberg (DE)
(74) Vertreter: v. Bezold & Partner Patentanwälte - PartG mbB

(56) Entgegenhaltungen:
- DE-A1- 2 620 521
- DE-A1- 4 423 940
- DE-A1- 10 339 635
- FR-A1- 2 993 037
- GB-A- 2 034 261

## Beschreibung

Die Erfindung betrifft eine Haltevorrichtung zum Halten eines Abgasrohrs für ein Kraftfahrzeug, insbesondere eines Nutzfahrzeugs, z. B. eines Lastkraftwagens oder eines Omnibusses. Eine ähnliche Haltevorrichtung ist aus Dokument DE 44 23 940 A1 bekannt. Figur 19 zeigt eine perspektivische Ansicht einer aus der Praxis bekannten und somit zum Stand der Technik gehörenden Haltevorrichtung H' zum Halten eines Kraftfahrzeug-Abgasrohrs A'. Die Haltevorrichtung H' umfasst drei separate, aneinander montierte Abschnitte. Einen ersten Abschnitt 1' mit einer Halteeinrichtung zur Montage an das Kraftfahrzeug, einen dritten Abschnitt 3' mit einer Sonderrohrschelle zum Halten des Abgasrohrs A' und einen zwischen den ersten Abschnitt 1' und den dritten Abschnitt 3' montierten zweiten Abschnitt 2'. Die Haltevorrichtung H' umfasst insbesondere zwei gebogene Halter, zwei Platten einer Sonderrohrschelle aus gebogenem Rundmaterial, vier Schrauben, zwei Scheiben und sechs selbstsichernde Muttern. Die aus einer Vielzahl an Teilen aufgebaute Haltevorrichtung H' ist zunächst im Montageprozess aufwendig und teuer und ist darüber hinaus mit der Gefahr von Abgasrohrbrüchen bei Schlaglochfahrt und Spannungsproblemen in Folge der Temperaturausdehnung des Abgasrohrs verbunden.

Eine Aufgabe der Erfindung ist es, eine verbesserte Haltevorrichtung zum Halten eines Abgasrohrs für ein Kraftfahrzeug, insbesondere ein Nutzfahrzeug, zu schaffen.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft eine Haltevorrichtung zum Halten eines Abgasrohrs für ein Kraftfahrzeug, insbesondere ein Nutzfahrzeug, z. B. ein Lastkraftwagen oder ein Omnibus.

Die Haltevorrichtung umfasst einen ersten Abschnitt mit einer Montageeinrichtung zur mittelbaren oder unmittelbaren Montage an das Kraftahrzeug, z. B. an ein Schwungradgehäuse des Kraftfahrzeugs. Die Montageeinrichtung kann z. B. zumindest ein Durchgangsloch für eine Schraub- und/oder Bolzenverbindung umfassen. Die Montageeinrichtung kann alternativ oder ergänzend zumindest eine Distanzbuchse zur Vorspannkrafterhöhung und zur Positionierung zwischen den ersten Abschnitt und das Kraftfahrzeug aufweisen.

Die Haltevorrichtung umfasst ferner eine Halteeinrichtung, die zum Halten eines vorzugsweise geraden Teilbereichs des Abgasrohrs dient und die eine Ausrichtachse aufweist, z. B. gemäß, insbesondere entlang, der der Teilbereich des Abgasrohrs ausrichtbar ist.

Die Haltevorrichtung umfasst außerdem einen zweiten Abschnitt, der sich zwischen dem ersten Abschnitt und der Halteeinrichtung erstreckt und der vorzugsweise dazu dient, den ersten Abschnitt vorzugsweise über einen dritten Abschnitt mit der Halteeinrichtung zu verbinden.

Die Haltevorrichtung zeichnet sich insbesondere dadurch aus, dass der zweite Abschnitt in einer Ausrichtebene ausgerichtet ist und die Halteeinrichtung ausgeführt ist, um die Ausrichtachse mit einer Abweichung von maximal +/- 25° senkrecht zur Ausrichtebene auszurichten, so dass vorzugsweise eine resultierende Wärmeausdehnungsachse des Abgasrohrs im Wesentlichen senkrecht zur Ausrichtebene ausrichtbar ist, z. B. mit einer Abweichung von maximal +/- 5°.Der zweite Abschnitt bzw. die Ausrichtebene ist folglich im Wesentlichen senkrecht zur resultierenden Wärmeausdehnungsachse des Abgasrohrs ausrichtbar.

Der zweite Abschnitt stellt insbesondere einen flexiblen Teil der Haltevorrichtung dar, um der resultierenden Wärmeausdehnung des Abgasrohrs entlang der Wärmeausdehnungsachse nachgeben zu können.

Dadurch kann eine im Wesentlichen spannungsfreie Halterung des Abgasrohrs geschaffen werden, die einerseits schwingungsresistent montierbar, aber dennoch wärmespannungsaufnehmend ist.

Die Haltevorrichtung bietet insbesondere ausreichend Sicherheit gegen vertikale Belastung, z. B. eine sogenannte Schlaglochfahrt des Kraftfahrzeugs, und ferner genügend Flexibilität gegenüber einer Wärmeausdehnung des Abgasrohrs in Abgasrohr-Längsrichtung, zweckmäßig des zuvor erwähnten Teilbereichs des Abgasrohrs.

Darüber hinaus bilden vorzugsweise der erste Abschnitt, der zweite Abschnitt und der dritte Abschnitt ein einziges Profilteil aus, so dass der Zusammenbau der Haltevorrichtung zweckmäßig im Wesentlichen nur die Montage der Halteeinrichtung an den dritten Abschnitt umfasst.

Insbesondere erstreckt sich die Mittel- und/oder Längsachse des zweiten Abschnitts in der Ausrichtebene.

Es ist möglich, dass der zweite Abschnitt eine Hohlkehle aufweist und die Hohlkehle vorzugsweise in der Ausrichtebene angeordnet ist.

Der zweite Abschnitt kann zweckmäßig in der Ausrichtebene im Wesentlichen bügelförmig, bogenförmig und/oder winkelförmig (z. B. im Wesentlichen L-förmig) verlaufen.

Der zweite Abschnitt umfasst zweckmäßig einen sich entlang seiner Längs- und/oder Mittelachse erstreckenden Querschnitt, dessen Widerstandsmoment um die Längs- und/oder Mittelachse des zweiten Abschnitts kleiner ist als dessen Widerstandsmoment um die Querachse des zweiten Abschnitts.

Der zweite Abschnitt weist in der Ausrichtebene insbesondere einen Rechteckquerschnitt auf.

Es ist möglich, dass die Halteeinrichtung zumindest geringfügig verdrehbar ist, um ihre Ausrichtachse zu verstellen, was z. B. über eine einfache Schraub- oder Bolzenverbindung möglich ist. Die Halteeinrichtung kann folglich im Zustand mit noch nicht anmontiertem Abgasrohr z. B. um mehr oder weniger als 360° verdrehbar sein.

Es ist aber ebenfalls möglich, dass die Halteeinrichtung mit unverstellbarer und somit z. B. fixierter Ausrichtachse an einem dritten Abschnitt montierbar ist.

Die Haltevorrichtung umfasst zweckmäßig einen dritten Abschnitt, an dem die Halteeinrichtung montierbar ist, insbesondere zumindest geringfügig verdrehbar montierbar ist, so dass die Ausrichtachse verstellbar ist. Die Halteeinrichtung ist vorzugsweise über eine Montageeinrichtung, z. B. über eine Schraub- oder Bolzenverbindung, an den dritten Abschnitt montierbar.

Es ist möglich, dass ein und dasselbe Profilteil den ersten Abschnitt und den zweiten Abschnitt und vorzugsweise den dritten Abschnitt ausbildet. Der erste Abschnitt, der zweite Abschnitt und vorzugsweise der dritte Abschnitt können folglich ein einstückig-integrales Profilteil bilden und/oder sind zweckmäßig nicht aneinander montiert.

Der zweite Abschnitt erstreckt sich zumindest im Wesentlichen mit seiner Längs- und/oder Mittelachse in der Ausrichtebene. Alternativ oder ergänzend kann der zweite Abschnitt sich auslegerförmig vom ersten Abschnitt vorzugsweise zur Halteeinrichtung, insbesondere dem dritten Abschnitt hin erstrecken.

Die Halteeinrichtung umfasst vorzugsweise eine Rohrschelle.

Der erste Abschnitt und/oder der dritte Abschnitt ragen vorzugsweise schräg aus der Ausrichtebene vor.

Der zweite Abschnitt erstreckt sich zweckmäßig zwischen dem ersten Abschnitt und dem dritten Abschnitt, um insbesondere den ersten Abschnitt und den dritten Abschnitt miteinander zu verbinden.

Das aus dem ersten Abschnitt, dem zweiten Abschnitt und vorzugsweise dem dritten Abschnitt gebildete Profilteil kann z. B. ein Formteil, insbesondere Biegeumformteil, sein.

Die Halteinrichtung kann z. B. ausgeführt sein, um die Ausrichtachse mit einer Abweichung von maximal +/- 20°, +/- 15°, +/- 10° oder +/- 5° senkrecht zur Ausrichtebene auszurichten.

Zu erwähnen ist noch, dass das Abgasrohr vorzugsweise stromabwärts einer Motorbremse und/oder eines Abgasturboladers des Kraftfahrzeugs verbaut wird.

Zu erwähnen ist ferner, dass die resultierende Wärmeausdehnungsachse des Abgasrohrs insbesondere die resultierende, längsgerichtete Wärmeausdehnungsachse des Abgasrohrs darstellt und/oder die resultierende Wärmeausdehnungsachse des gesamten Abgasrohrs.

Die Erfindung ist nicht auf eine Haltevorrichtung beschränkt, sondern umfasst auch eine Anordnung mit einem Abgasrohr für ein Kraftfahrzeug und einer Haltevorrichtung wie hierin offenbart.

Es ist möglich, dass das Abgasrohr eine resultierende Wärmeausdehnungsachse aufweist und die resultierende Wärmeausdehnungsachse im Wesentlichen senkrecht, z. B. mit einer Abweichung von maximal +/- 5°, zur Ausrichtebene verläuft.

Die Halteeinrichtung greift insbesondere an einem geraden Teilstück des Abgasrohrs an.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht eines Abgasrohrs mit einer Haltevorrichtung gemäß einer Ausführungsform der Erfindung,
- Figur 2: zeigt eine Seitenansicht des Abgasrohrs und der Haltevorrichtung der Figur 1,
- Figur 3: zeigt eine andere Seitenansicht des Abgasrohrs und der Haltevorrichtung der Figuren 1 und 2,
- Figur 4: zeigt eine vergrößerte Ansicht der Haltevorrichtung der Figuren 1 bis 3,
- Figuren 5 bis 9: zeigen verschiedene Ansichten der Haltevorrichtung der Figuren 1 bis 4,
- Figur 10: zeigt eine Ansicht einer Haltevorrichtung gemäß einer anderen Ausführungsform der Erfindung,
- Figuren 11 bis 13: zeigen verschiedene Ansichten der Haltevorrichtung der Figur 10,
- Figur 14: zeigt eine schematische Prinzipansicht einer Haltevorrichtung gemäß einer Ausführungsform der Erfindung,
- Figur 15: zeigt eine schematische Prinzipansicht einer Haltevorrichtung gemäß einer anderen Ausführungsform der Erfindung,
- Figur 16: zeigt eine Querschnittsansicht des zweiten Abschnitts in einer Ausrichtebene gemäß einer Ausführungsform der Erfindung,
- Figuren 17 und 18: zeigen Ansichten zweier Haltevorrichtungen gemäß verschiedener Ausführungsformen der Erfindung und
- Figur 19: zeigt eine perspektivische Ansicht einer Haltevorrichtung und eines Abgasrohrs gemäß Stand der Technik.

Die in den Figuren gezeigten Ausführungsformen stimmen teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

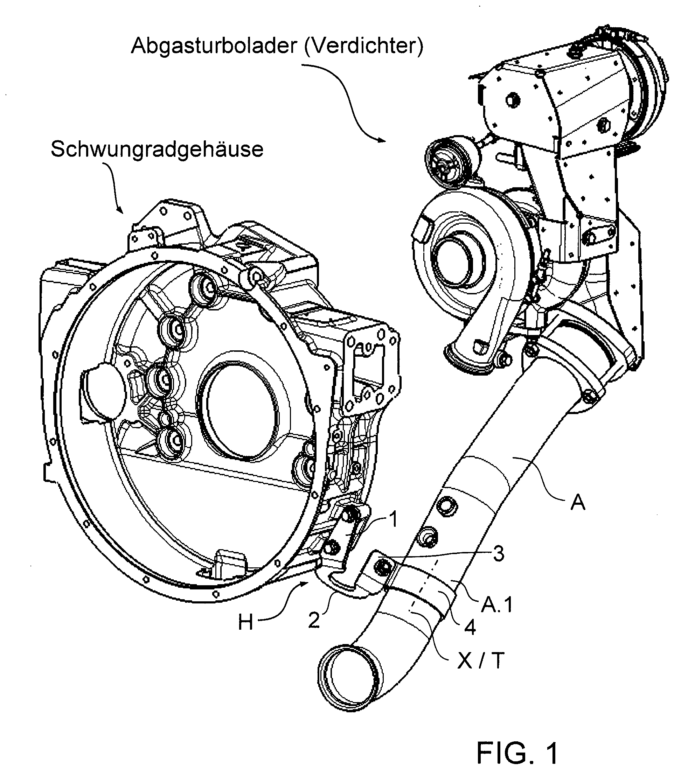

Figur 1 zeigt eine perspektivische Ansicht einer Haltevorrichtung H gemäß einer Ausführungsform der Erfindung zum Halten eines Abgasrohrs A eines Kraftfahrzeugs, insbesondere eines Nutzfahrzeugs, z. B. eines Lastkraftwagens oder eines Omnibusses.

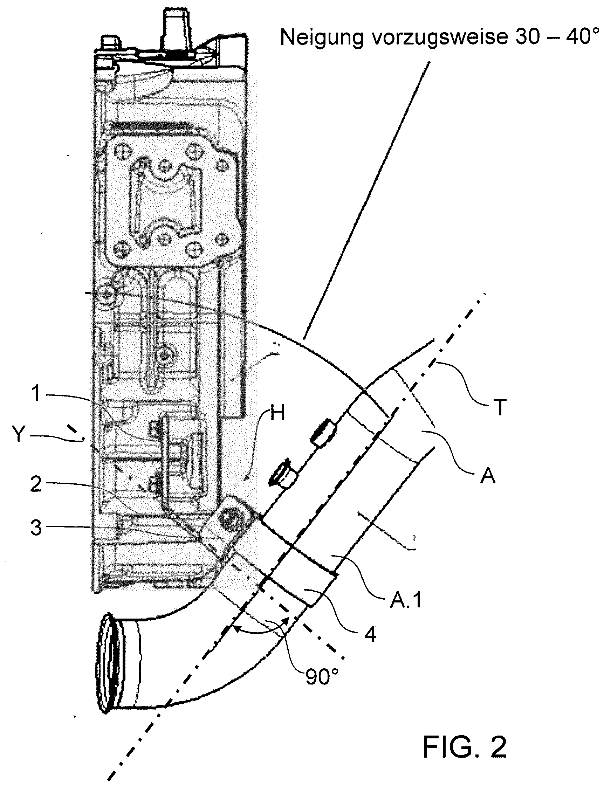

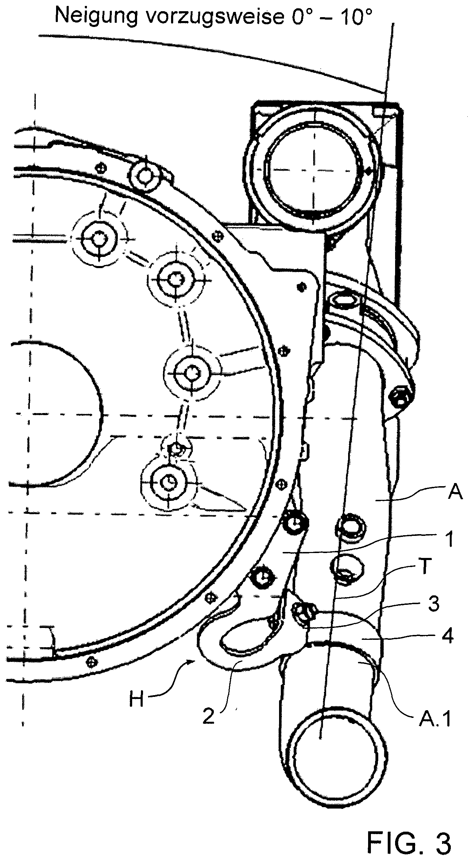

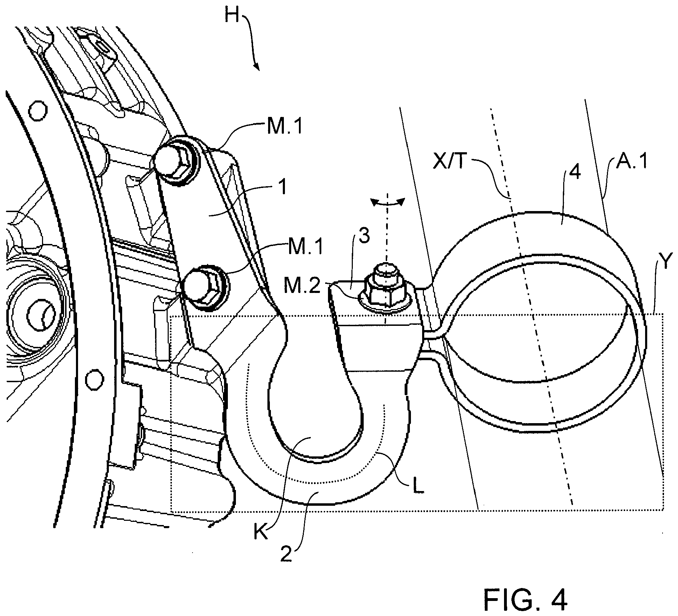

Die Figuren 2 und 3 zeigen die Haltevorrichtung H und das Abgasrohr A in zwei verschiedenen Seitenansichten, während Figur 4 die Haltevorrichtung H im Detail ohne Abgasrohr A zeigt.

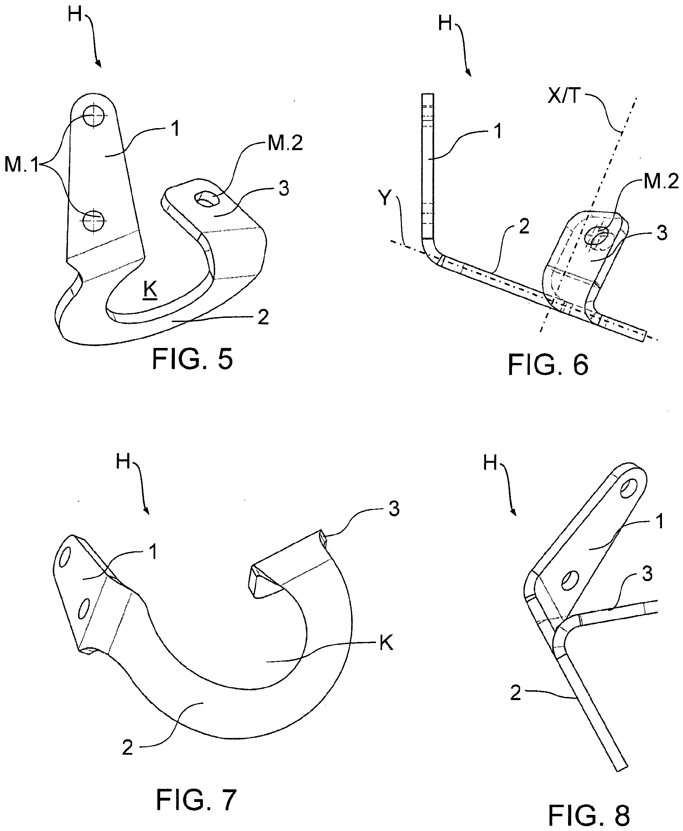

Die Figuren 5 bis 9 zeigen verschiedene Ansichten der Haltevorrichtung H, allerdings ohne eine weiter unten erörterte Halteeinrichtung 4.

Die Haltevorrichtung H wird nun unter Bezugnahme auf die Figuren 1 bis 9 beschrieben.

Die Haltevorrichtung H umfasst einen ersten Abschnitt 1 mit einer Montageeinrichtung M.1 zur Montage an das Kraftfahrzeug, insbesondere ein Schwungradgehäuse. Die Montageeinrichtung M.1 kann eine oder mehrere Durchlassöffnungen umfassen, mittels denen der erste Abschnitt 1 und somit die Haltevorrichtung H an das Kraftfahrzeug, z. B. mittels einer Schraub- oder Bolzenverbindung, montiert werden kann. Im Rahmen der Erfindung sind auch andere Montagen möglich, z. B. über Zwischenkonstruktionen, mittels denen der erste Abschnitt 1 mittelbar an das Kraftfahrzeug montierbar ist. Unter der Schraubverbindung können eine oder mehrere Distanzbuchsen angeordnet sein, um die Vorspannkraft zu erhöhen.

Die Haltevorrichtung H umfasst ferner eine als Schelle ausgeführte Halteeinrichtung 4 zum Halten eines zweckmäßig geraden Teilbereichs A.1 des Abgasrohrs A. Die Halteeinrichtung 4 umfasst eine Ausrichtachse X, entlang bzw. gemäß der der Teilbereich A.1 und somit zweckmäßig das Abgasrohr A ausrichtbar ist.

Die Haltevorrichtung H umfasst ferner einen zweiten Abschnitt 2, der sich zwischen dem ersten Abschnitt 1 und der Halteeinrichtung 4 erstreckt.

Die Halteeinrichtung 4 ist insbesondere an einem dritten Abschnitt 3 montiert, z. B. über eine Schraubverbindung M.2, so dass sich der zweite Abschnitte 2 zweckmäßig zwischen dem ersten Abschnitt 1 und dem dritten Abschnitt 3 erstreckt, um den ersten Abschnitt 1 mit dem dritten Abschnitt 3 zu verbinden.

Der erste Abschnitt 1, der zweite Abschnitt 2 und der dritte Abschnitt 3 werden durch ein und dasselbe Profilteil ausgebildet. Der erste Abschnitt 1, der zweite Abschnitt 2 und der dritte Abschnitt 3 bilden somit insbesondere ein einstückig-integrales Profilteil. Die Halteeinrichtung 4 hingegen ist hierzu ein vorzugsweise separates Bauteil, das zweckmäßig an den dritten Abschnitt 3 montierbar ist.

Bezugszeichen T kennzeichnet die resultierende Wärmeausdehnungsachse T des Abgasrohrs A.

Der zweite Abschnitt 2 ist in einer in den Figuren 2 und 4 schematisch dargestellten Ausrichtebene Y ausgerichtet. Die Halteeinrichtung 4 ist ausgeführt, um die Ausrichtachse X im Wesentlichen senkrecht, also um zweckmäßig im Wesentlichen 90°, zur Ausrichtebene Y auszurichten, so dass die resultierende Wärmeausdehnungsachse T ebenfalls im Wesentlichen senkrecht zur Ausrichtebene Y verläuft. Die Ausrichtachse X und die Wärmeausdehnungsachse T verlaufen im Wesentlichen koaxial. Im Rahmen der Erfindung sind allerdings Ausführungsformen möglich, in denen zwar die resultierende Wärmeausdehnungsachse T des Abgasrohrs A zumindest nahezu senkrecht zur Ausrichtebene Y ausgerichtet ist, allerdings die Ausrichtachse X mit einer Abweichung von z. B. 20° senkrecht zur Ausrichtebene Y ausgerichtet ist.

Die Halteeinrichtung 4 kann über die Montageeinrichtung M.2 zumindest geringfügig drehbar an dem dritten Abschnitt 3 montiert sein, wodurch die Ausrichtachse X vor Montage des Abgasrohrs A zumindest geringfügig verstellbar ist, was in Figur 4 schematisch durch den Doppelpfeil angedeutet ist.

Der zweite Abschnitt 2 umfasst eine Hohlkehle K, die ebenfalls in der Ausrichtebene Y angeordnet ist.

Der zweite Abschnitt 2 erstreckt sich mit seiner Längs- und/oder Mittelachse L zumindest abschnittsweise in der Ausrichtebene Y im Wesentlichen bügelförmig, insbesondere im Wesentlichen U-förmig.

Der erste Abschnitt 1 und der dritte Abschnitt 3 ragen schräg aus der Ausrichtebene Y heraus.

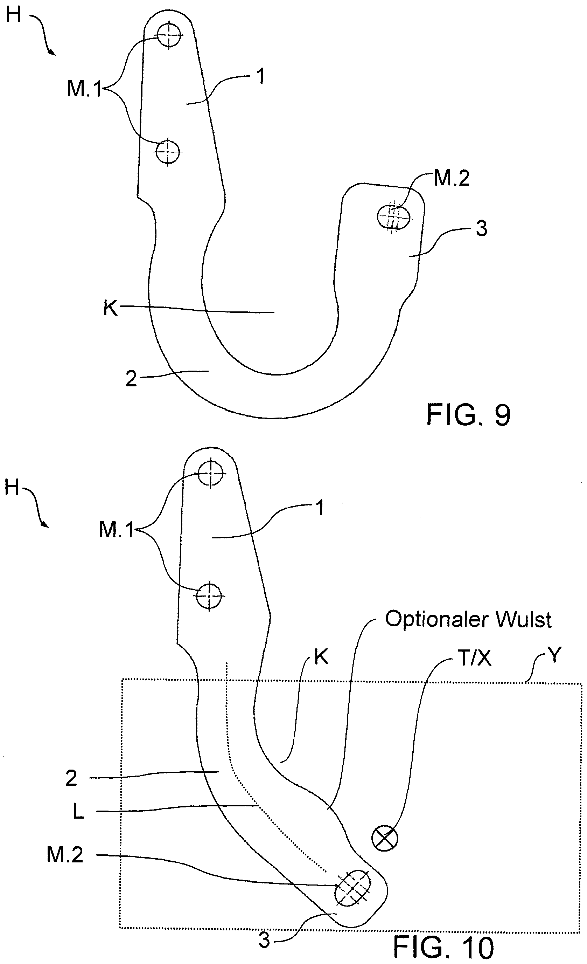

Figur 10 zeigt eine Ansicht einer Haltevorrichtung H gemäß einer anderen Ausführungsform der Erfindung.

Eine Besonderheit der in Figur 10 gezeigten Haltevorrichtung H ist, dass der zweite Abschnitt 2 sich nicht im Wesentlichen U-förmig in der Ausrichtebene Y erstreckt, sondern bogen- oder winkelförmig.

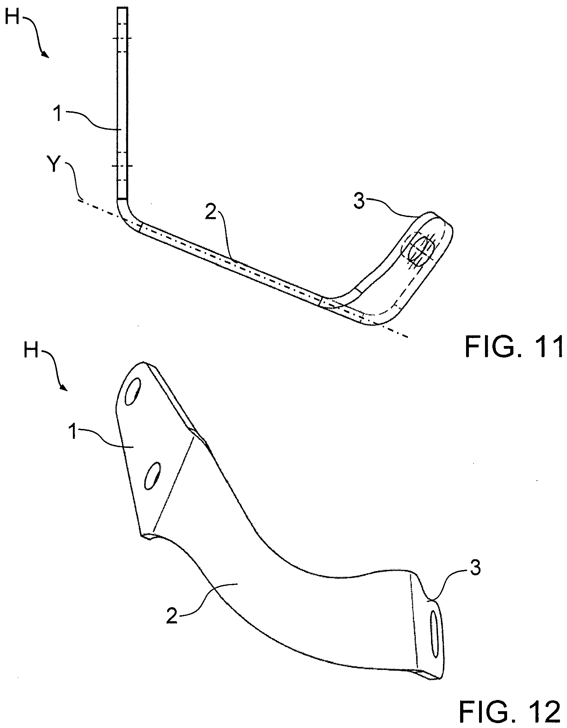

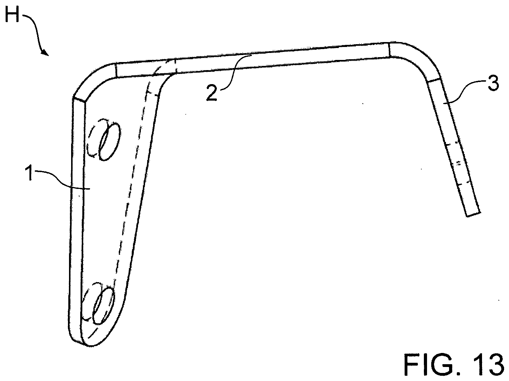

Die Figuren 11 bis 13 zeigen verschiedene Ansichten der Haltevorrichtung H der Figur 10.

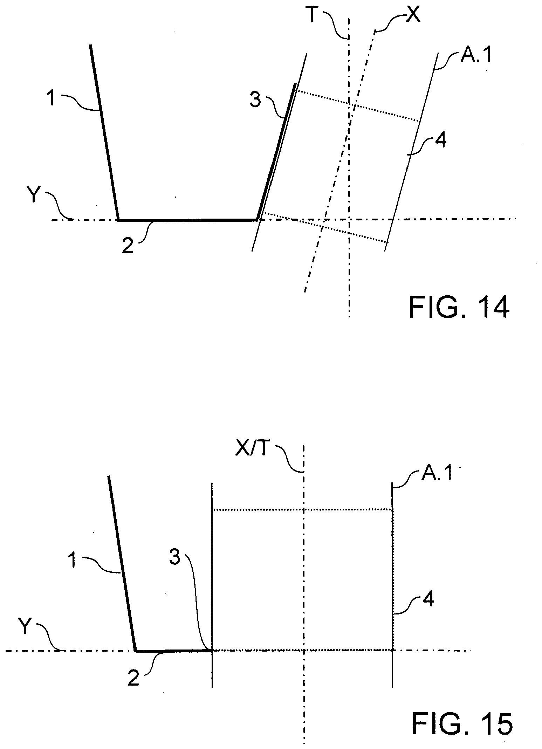

Figur 14 zeigt eine schematische Prinzipansicht einer Haltevorrichtung H gemäß einer Ausführungsform der Erfindung. So ist insbesondere der zweite Abschnitt 2 in der Ausrichtebene Y ausgerichtet und die Halteeinrichtung H ist ausgeführt, um die Ausrichtachse X mit einer Abweichung von maximal +/- 25°, in Figur 14 ca. 15°, senkrecht zur Ausrichtebene Y auszurichten, so dass die resultierende, längsgerichtete Wärmeausdehnungsachse T des Abgasrohrs A im Wesentlichen senkrecht zur Ausrichtebene Y verlaufen kann.

Figur 15 zeigt eine schematische Prinzipansicht einer Haltevorrichtung H gemäß einer anderen Ausführungsform der Erfindung. So ist insbesondere der zweite Abschnitt 2 in der Ausrichtebene Y ausgerichtet und die Halteeinrichtung H ist ausgeführt, um die Ausrichtachse X senkrecht zur Ausrichtebene Y auszurichten, so dass die resultierende, längsgerichtete Wärmeausdehnungsachse T des Abgasrohrs A ebenfalls senkrecht zur Ausrichtebene Y verlaufen kann.

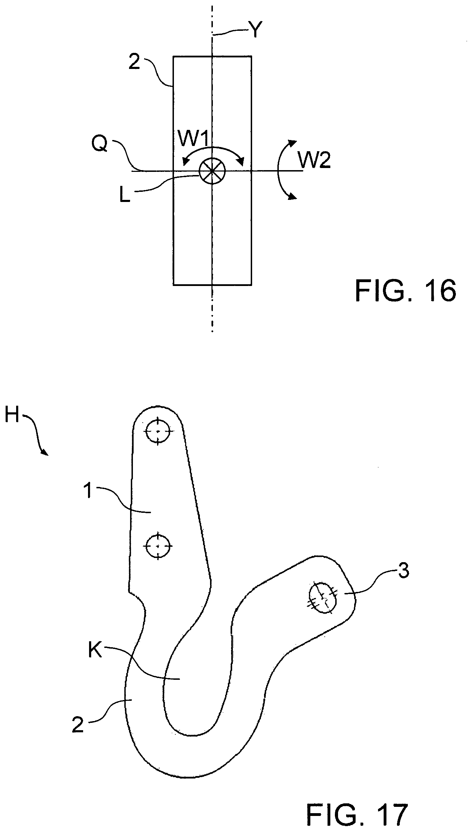

Figur 16 zeigt eine Querschnittsansicht des zweiten Abschnitts 2 in der Ausrichtebene Y. Der Querschnitt ist als Rechteckquerschnitt ausgeführt, dessen Widerstandsmoment W1 um die Längsachse L des zweiten Abschnitts 2 kleiner ist als dessen Widerstandsmoment W2 um die Querachse Q des zweiten Abschnitts 2.

Aus der vorhergehenden Beschreibung der Haltevorrichtung H ergibt sich, dass der zweite Abschnitt 2 sich mit seiner Längsachse L in der Ausrichtebene Y erstreckt und die Halteeinrichtung 4 ausgeführt ist, um die Ausrichtachse X mit einer Abweichung von maximal +/- 25° senkrecht zur Ausrichtebene Y auszurichten, so dass die resultierende, insbesondere längsgerichtete Wärmeausdehnungsachse T des Abgasrohrs A im Montagezustand des Abgasrohrs A im Wesentlichen senkrecht zur Ausrichtebene Y verlaufen kann.

Die Haltevorrichtung H schafft dabei eine ausreichende Sicherheit gegen vertikale Belastung, also insbesondere eine Schlaglochfahrt, von bis zu 8g oder sogar darüber hinaus. Trotzdem schafft sie eine ausreichende Flexibilität gegen die Wärmeausdehnung des Abgasrohrs A entlang der resultierenden Wärmeausdehnungsachse T von bis zu 2,5 mm oder sogar darüber hinaus bei einer Temperatur von ca. 450 °C.

Sie gewährleistet ferner eine spannungsfreie und einfache Montage, umfasst im Wesentlichen nur das Profilteil aus dem ersten Abschnitt 1, dem zweiten Abschnitt 2 und dem dritten Abschnitt 3 und der daran montierbaren Halteeinrichtung 4.

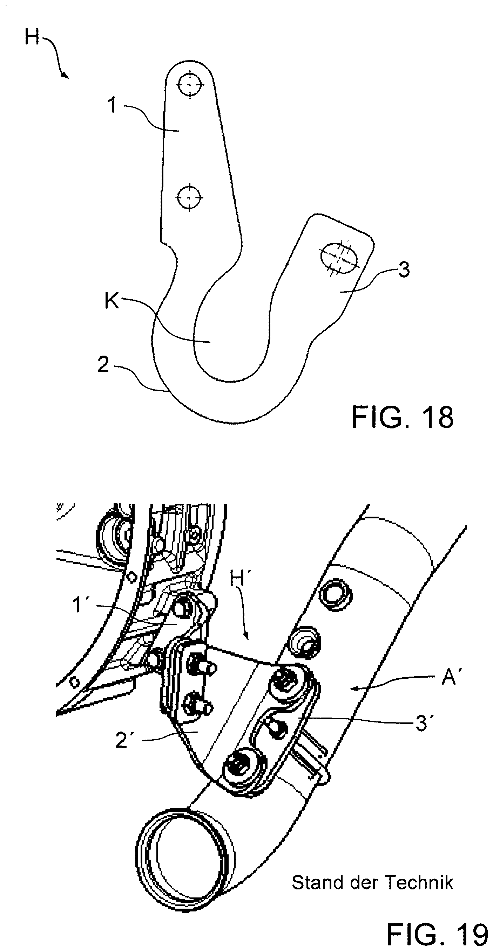

Die Figuren 17 und 18 zeigen zwei weitere Haltevorrichtungen H gemäß unterschiedlichen Ausführungsformen der Erfindung.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Erster Abschnitt
- 2: Zweiter Abschnitt
- 3: Dritter Abschnitt
- 4: Halteeinrichtung
- A: Abgasrohr
- A.1: gerader Teilbereich des Abgasrohrs, an dem zweckmäßig die Halteeinrichtung angreift
- H: Haltevorrichtung
- X: Ausrichtachse
- Y: Ausrichtebene
- M.1: Montageeinrichtung zur Montage am Kraftfahrzeug
- M.2: Montageeinrichtung, vorzugsweise montierbar am dritten Abschnitt, zur Montage der Halteeinrichtung
- W1: Widerstandsmoment
- W2: Widerstandsmoment
- Q: Querachse des zweiten Abschnitts
- L: Längs- und/oder Mittelachse des zweiten Abschnitts
- T: Resultierende, insbesondere längsgerichtete, Wärmeausdehnungsachse des Abgasrohrs
- K: Hohlkehle

## Patentansprüche

1. Haltevorrichtung (H) zum Halten eines Abgasrohrs (A) für ein Kraftfahrzeug, mit:
- einem ersten Abschnitt (1) mit einer Montageeinrichtung (M.1) zur Montage an das Kraftfahrzeug,
- einer Halteinrichtung (4) zum Halten eines Teilbereichs (A.1) des Abgasrohrs (A) und mit einer Ausrichtachse (X), insbesondere entlang der der Teilbereich (A.1) ausrichtbar ist, und
- einem zweiten Abschnitt (2), der sich zwischen dem ersten Abschnitt (1) und der Halteinrichtung (4) erstreckt,
wobei
- der zweite Abschnitt (2) in einer Ausrichtebene (Y) ausgerichtet ist und die Halteinrichtung (4) ausgeführt ist, um die Ausrichtachse (X) mit einer Abweichung von maximal +/- 25° senkrecht zur Ausrichtebene (Y) auszurichten, und
- ein und dasselbe Profilteil den ersten Abschnitt (1) und den zweiten Abschnitt (2) ausbildet,
**dadurch gekennzeichnet, dass**
- der zweite Abschnitt (2) eine Hohlkehle (K) aufweist, die in der Ausrichtebene (Y) angeordnet ist.

2. Haltevorrichtung (H) nach Anspruch 1, **dadurch gekennzeichnet, dass** der zweite Abschnitt (2) in der Ausrichtebene (Y) sich im Wesentlichen bügelförmig, bogenförmig oder winkelförmig erstreckt.

3. Haltevorrichtung (H) nach einem der vorhergehenden Ansprüche, **dadurch gekennzeichnet, dass** der zweite Abschnitt (2) einen Querschnitt aufweist, dessen Widerstandsmoment (W1) um die Längs- und/oder Mittelachse (L) des zweiten Abschnitts (2) kleiner ist als dessen Widerstandsmoment (W2) um die Querachse (Q) des zweiten Abschnitts (2).

4. Haltevorrichtung (H) nach einem der vorhergehenden Ansprüche, **dadurch gekennzeichnet, dass** der zweite Abschnitt (2) in der Ausrichtebene (X) einen Rechteckquerschnitt aufweist.

5. Haltevorrichtung (H) nach einem der vorhergehenden Ansprüche, **dadurch gekennzeichnet, dass** die Halteeinrichtung (4) zumindest geringfügig verdrehbar ist, um ihre Ausrichtachse (X) zu verstellen, vorzugsweise über eine Montageeinrichtung (M.2).

6. Haltevorrichtung (H) nach einem der vorhergehenden Ansprüche, **dadurch gekennzeichnet, dass** die Haltevorrichtung (H) einen dritten Abschnitt (3) umfasst, an dem die Halteeinrichtung (4) montierbar ist, vorzugsweise über eine Montageeinrichtung (M.2).

7. Haltevorrichtung (H) nach Anspruch 6, **dadurch gekennzeichnet, dass** ein und dasselbe Profilteil den ersten Abschnitt (1) und den zweiten Abschnitt (2) und den dritten Abschnitt (3) ausbildet.

8. Haltevorrichtung (H) nach einem der vorhergehenden Ansprüche, **dadurch gekennzeichnet, dass** sich der zweite Abschnitt (2) mit seiner Längs- und/oder Mittelachse (L) in der Ausrichtebene (Y) und/oder auslegerförmig vom ersten Abschnitt (1) hin zur Halteeinrichtung (4) erstreckt.

9. Haltevorrichtung (H) nach einem der vorhergehenden Ansprüche, **dadurch gekennzeichnet, dass** der erste Abschnitt (1) und/oder der dritte Abschnitt (3) schräg aus der Ausrichtebene (Y) vorragen.

10. Haltevorrichtung (H) nach einem der vorhergehenden Ansprüche, **dadurch gekennzeichnet, dass** die Halteinrichtung (4) ausgeführt ist, um die Ausrichtachse (X) mit einer Abweichung von maximal +/- 20°, +/- 15°, +/- 10° oder +/- 5° senkrecht zur Ausrichtebene (Y) auszurichten.

11. Haltevorrichtung (H) nach einem der vorhergehenden Ansprüche, **dadurch gekennzeichnet, dass** die Halteinrichtung (4) als Schelle ausgebildet ist.

12. Haltevorrichtung (H) nach einem der vorhergehenden Ansprüche, **dadurch gekennzeichnet, dass** die Montageeinrichtung (M.1) zumindest eine Distanzbuchse zur Vorspannkrafterhöhung und zur Positionierung zwischen den ersten Abschnitt (1) und das Kraftfahrzeug aufweist.

13. Anordnung mit einem Abgasrohr (A) und einer Haltevorrichtung (H) nach einem der vorhergehenden Ansprüche.

14. Anordnung nach Anspruch 13, **dadurch gekennzeichnet, dass** das Abgasrohr (A) eine resultierende Wärmeausdehnungsachse (T) aufweist und die resultierende Wärmeausdehnungsachse (T) im Wesentlichen senkrecht zur Ausrichtebene (Y) verläuft.

## Claims

1. Holding apparatus (H) for holding an exhaust pipe (A) for a motor vehicle, having:
- a first portion (1) with a mounting device (M.1) for the mounting on the motor vehicle,
- a holding device (4) for holding a subregion (A.1) of the exhaust pipe (A) and with an alignment axis (X), in particular along which the subregion (A.1) can be aligned, and
- a second portion (2) which extends between the first portion (1) and the holding device (4),
wherein
- the second portion (2) is aligned in an alignment plane (Y), and the holding device (4) is designed in order to align the alignment axis (X) with a deviation of at maximum +/- 25° perpendicularly to the alignment plane (Y), and
- one and the same profile part forms the first portion (1) and the second portion (2),
**characterized in that**
- the second portion (2) has a channel (K) which is arranged in the alignment plane (Y).

2. Holding apparatus (H) according to Claim 1, **characterized in that** the second portion (2) extends in the alignment plane (Y) in a substantially bow-shaped, curved or angular manner.

3. Holding apparatus (H) according to either of the preceding claims, **characterized in that** the second portion (2) has a cross section, the moment of resistance (W1) of which about the longitudinal and/or centre axis (L) of the second portion (2) is smaller than the moment of resistance (W2) of which about the transverse axis (Q) of the second portion (2).

4. Holding apparatus (H) according to one of the preceding claims, **characterized in that** the second portion (2) has a rectangular cross section in the alignment plane (X).

5. Holding apparatus (H) according to one of the preceding claims, **characterized in that** the holding device (4) is at least slightly rotatable in order to adjust its alignment axis (X), preferably via a mounting device (M.2).

6. Holding apparatus (H) according to one of the preceding claims, **characterized in that** the holding apparatus (H) comprises a third portion (3) on which the holding device (4) can be mounted, preferably via a mounting device (M.2).

7. Holding apparatus (H) according to Claim 6, **characterized in that** one and the same profile part forms the first portion (1) and the second portion (2) and the third portion (3).

8. Holding apparatus (H) according to one of the preceding claims, **characterized in that** the second portion (2) extends with its longitudinal and/or centre axis (L) in the alignment plane (Y) and/or in the form of an extension arm from the first portion (1) towards the holding device (4).

9. Holding apparatus (H) according to one of the preceding claims, **characterized in that** the first portion (1) and/or the third portion (3) project obliquely out of the alignment plane (Y).

10. Holding apparatus (H) according to one of the preceding claims, **characterized in that** the holding device (4) is designed in order to align the alignment axis (X) with a deviation of at maximum +/- 20°, +/- 15°, +/-10° or +/- 5° perpendicularly to the alignment plane (Y).

11. Holding apparatus (H) according to one of the preceding claims, **characterized in that** the holding device (4) is designed as a clip.

12. Holding apparatus (H) according to one of the preceding claims, **characterized in that** the mounting device (M.1) has at least one spacer bushing for increasing the prestressing force and for the positioning between the first portion (1) and the motor vehicle.

13. Arrangement with an exhaust pipe (A) and a holding apparatus (H) according to one of the preceding claims.

14. Arrangement according to Claim 13, **characterized in that** the exhaust pipe (A) has a resulting thermal expansion axis (T), and the resulting thermal expansion axis (T) runs substantially perpendicularly to the alignment plane (Y).

## Revendications

1. Dispositif de retenue (H) pour retenir un tuyau d'échappement (A) pour un véhicule automobile, comprenant :
- une première portion (1) avec un dispositif de montage (M.1) pour le montage sur le véhicule automobile,
- un système de retenue (4) pour retenir une région partielle (A.1) du tuyau d'échappement (A) et avec un axe d'orientation (X), en particulier le long duquel la région partielle (A.1) peut être orientée, et
- une deuxième portion (2) qui s'étend entre la première portion (1) et le système de retenue (4),
- la deuxième portion (2) étant orientée dans un plan d'orientation (Y) et le système de retenue (4) étant réalisé de manière à orienter l'axe d'orientation (X) avec un écart de ± 25° au maximum perpendiculairement au plan d'orientation (Y), et
- une même et unique pièce profilée constituant la première portion (1) et la deuxième portion (2),
**caractérisé en ce que**
- la deuxième portion (2) présente une gorge creuse (K) qui est disposée dans le plan d'orientation (Y).

2. Dispositif de retenue (H) selon la revendication 1, **caractérisé en ce que** la deuxième portion (2) s'étend dans le plan d'orientation (Y) essentiellement en forme d'étrier, en forme d'arc ou sous forme coudée.

3. Dispositif de retenue (H) selon l'une quelconque des revendications précédentes, **caractérisé en ce que** la deuxième portion (2) présente une section transversale dont le couple résistant (W1) autour de l'axe longitudinal et/ou de l'axe médian (L) de la deuxième portion (2) est inférieur à son couple résistant (W2) autour de l'axe transversal (Q) de la deuxième portion (2).

4. Dispositif de retenue (H) selon l'une quelconque des revendications précédentes, **caractérisé en ce que** la deuxième portion (2) présente dans le plan d'orientation (X) une section transversale rectangulaire.

5. Dispositif de retenue (H) selon l'une quelconque des revendications précédentes, **caractérisé en ce que** le système de retenue (4) peut être tourné au moins légèrement afin de régler son axe d'orientation (X), de préférence par le biais d'un système de montage (M.2).

6. Dispositif de retenue (H) selon l'une quelconque des revendications précédentes, **caractérisé en ce que** le dispositif de retenue (H) comprend une troisième portion (3) au niveau de laquelle le système de retenue (4) peut être monté, de préférence par le biais d'un système de montage (M.2).

7. Dispositif de retenue (H) selon la revendication 6, **caractérisé en ce qu'**une même et unique pièce profilée constitue la première portion (1) et la deuxième portion (2) et la troisième portion (3).

8. Dispositif de retenue (H) selon l'une quelconque des revendications précédentes, **caractérisé en ce que** la deuxième portion (2) s'étend avec son axe longitudinal et/ou son axe médian (L) dans le plan d'orientation (Y) et/ou en forme de bras de potence depuis la première portion (1) vers le système de retenue (4).

9. Dispositif de retenue (H) selon l'une quelconque des revendications précédentes, **caractérisé en ce que** la première portion (1) et/ou la troisième portion (3) font saillie obliquement hors du plan d'orientation (Y).

10. Dispositif de retenue (H) selon l'une quelconque des revendications précédentes, **caractérisé en ce que** le système de retenue (4) est réalisé de manière à orienter l'axe d'orientation (X) avec un écart maximal de ± 20°, ± 15°, ± 10° ou ± 5° perpendiculairement au plan d'orientation (Y).

11. Dispositif de retenue (H) selon l'une quelconque des revendications précédentes, **caractérisé en ce que** le système de retenue (4) est réalisé sous forme de collier de serrage.

12. Dispositif de retenue (H) selon l'une quelconque des revendications précédentes, **caractérisé en ce que** le système de montage (M.1) présente au moins une douille d'espacement pour augmenter la force de serrage et en vue du positionnement entre la première portion (1) et le véhicule automobile.

13. Agencement comprenant un tuyau d'échappement (A) et un dispositif de retenue (H) selon l'une quelconque des revendications précédentes.

14. Agencement selon la revendication 13, **caractérisé en ce que** le tuyau d'échappement (A) présente un axe de dilatation thermique résultant (T) et l'axe de dilatation thermique résultant (T) s'étend essentiellement perpendiculairement au plan d'orientation (Y).
